# EUROPEAN PATENT APPLICATION

(11) **EP 4 827 118 A1**
(43) Date of publication of application: **21.10.2026**
(21) Application number: 26173191.3
(22) Date of filing: 17.04.2026
(51) Int. Cl.: H04R 25/00

(54) **METHOD AND NON-TRANSITORY COMPUTER-READABLE MEDIUM FOR GENERATING SUMMARY**

(30) Priority: 17.04.2025 US 202563790435 P
(71) Applicant: WS Audiology A/S, 3540 Lynge (DK)
(72) Inventor: Jespersen, Caspar Aleksander Bang, 3540 Lynge (DK); Ougaard, Asger, 3540 Lynge (DK); Johnsrude, Blair Richard, 3540 Lynge (DK); Berthelsen, Tina Hildebrandt, 3540 Lynge (DK); Henningsen, Soeren, 3540 Lynge (DK)

(57) **Abstract**

A computer-implemented method and non-transitory computer-readable medium for generating a summary of a hearing-aid fitting session between a first person and a second person are disclosed. Audio data representing a conversation during the fitting session is transcribed, and time-stamped inputs from hearing-aid fitting software are temporally associated with corresponding transcript portions. A trained machine-learning model processes the associated transcript data and fitting-software inputs to generate a summary identifying hearing-aid fitting actions and corresponding conversational context as schematically illustrated in FIG. 3.

## Description

### CROSS-REFERENCE TO RELATED APPLICATIONS

This application claims the benefit of U.S. Provisional Application No. 63/790,435, filed April 17, 2025, the entire disclosure of which is incorporated herein by reference.

### BACKGROUND

Generally, a hearing system according to one or more aspects of the disclosure is understood as meaning any device which provides an output signal that can be perceived as an acoustic signal by a user or contributes to providing such an output signal, and which has means which are customized to compensate for an individual hearing loss of the user or contribute to compensating for the hearing loss of the user. They are, for example, hearing aids which can be worn on the body or by the ear, for example on or in the ear, and which can be fully or partially implanted. However, some devices whose main aim is not to compensate for a hearing loss, may also be regarded as hearing systems, for example consumer electronic devices such as mobile phones and headsets, earbuds or other types of hearables devices provided they have measures for compensating for an individual hearing loss.

Within the present context a traditional hearing aid can be understood as a small, battery-powered, microelectronic device designed to be worn behind or in the human ear by a hearing-impaired user. Prior to use, the hearing aid is adjusted by a hearing aid fitter according to a prescription. The prescription is based on a hearing test, resulting in a so-called audiogram, of the performance of the hearing-impaired user's unaided hearing. The prescription is developed to reach a setting where the hearing aid will alleviate a hearing loss by amplifying sound at frequencies in those parts of the audible frequency range where the user suffers a hearing deficit. A hearing aid may include one or more microphones, a battery, a microelectronic circuit including a signal processor, and an acoustic output transducer. The signal processor is preferably a digital signal processor. The hearing aid is enclosed in a casing suitable for fitting behind or in a human ear.

Within the present context a hearing system may include a single hearing aid (a so called monaural hearing system) or include two hearing aids, one for each ear of the hearing aid user (a so called binaural hearing system). Furthermore, the hearing system may include an external device, such as a smart phone having software applications adapted to interact with other devices of the hearing system. Thus, within the present context the term "hearing system device" may denote a hearing aid or an external device.

The mechanical design of hearing aids has developed into a number of general categories. As the name suggests, Behind-The-Ear (BTE) hearing aids are worn behind the ear. To be more precise, an electronics unit including a housing containing the major electronics parts thereof is worn behind the ear. An earpiece for emitting sound to the hearing aid user is worn in the ear, e.g. in the concha or the ear canal. In a traditional BTE hearing aid, a sound tube is used to convey sound from the output transducer, which in hearing aid terminology is normally referred to as the receiver, located in the housing of the electronics unit and to the ear canal. In other types of hearing aids, a conducting member including electrical conductors conveys an electric signal from the housing and to a receiver placed in the earpiece in the ear. Such hearing aids are commonly referred to as Receiver-In-The-Ear (RITE) hearing aids. In a specific type of RITE hearing aids the receiver is placed inside the ear canal. This category is sometimes referred to as Receiver-In-Canal (RIC) hearing aids.

In-The-Ear (ITE) hearing aids are designed for arrangement in the ear, normally in the funnel-shaped outer part of the ear canal. In a specific type of ITE hearing aids the hearing aid is placed substantially inside the ear canal. This category is sometimes referred to as Completely-In-Canal (CIC) hearing aids. This type of hearing aid requires an especially compact design in order to allow it to be arranged in the ear canal, while accommodating the components necessary for operation of the hearing aid.

Hearing loss of a hearing impaired person is normally frequency-dependent. This means that the hearing loss of the person varies depending on the frequency. Therefore, when compensating for hearing losses, it is advantageous to utilize frequency-dependent amplification.

Additionally, the amplification is level dependent and adapted for compressing the signal in order to control the dynamic range of the output of the hearing aid. The compression can be regarded as an automatic adjustment of the gain levels for the purpose of improving the listening comfort of the user of the hearing aid and the compression may therefore be denoted Automatic Gain Control (AGC). The AGC also provides the gain values required for alleviating the hearing loss of the person using the hearing aid. Compression may be implemented in the way described in the international application WO-A1-9934642.

Finally hearing aids normally may include anti-feedback algorithms for continuously measuring input levels and output levels as a function of frequency for the purpose of continuously controlling acoustic feedback instability by providing cancellation signals and through lowering of the frequency dependent gain settings when necessary.

Additionally, it has been suggested to use models for the prediction of the intelligibility of speech after a transmission though a linear system. The most well-known of these models is the "articulation index", the speech intelligibility index, SII, and the "speech transmission index", STI, but other indices exist.

The ANSI S3.5-1969 standard (revised 1997) provides methods for the calculation of the speech intelligibility index, SII. The SII makes it possible to predict the intelligible amount of the transmitted speech information, and thus, the speech intelligibility in a linear transmission system. The SII is a function of the system's transfer function and of the acoustic input, i.e. indirectly of the speech spectrum at the output of the system. Furthermore, it is possible to take both the effects of a masking noise and the effects of a hearing aid user's hearing loss into account in the SII. The SII is always a number between 0 (speech is not intelligible at all) and 1 (speech is fully intelligible). The SII is, in fact, an objective measure of the system's ability to convey speech intelligibility and hereby hopefully making it possible for the listener to understand what is being said.

An increase of gain in the hearing aid will always lead to an increase in the loudness of the amplified sound, which may in some cases lead to an unpleasantly high sound level, thus creating loudness discomfort for the hearing aid user.

The loudness of the output of the hearing aid may be calculated according to a loudness model, e.g. by the method described in an article by B.C.J. Moore and B.R. Glasberg "A revision of Zwicker's loudness model", Acta Acustica Vol. 82 (1996) 335-345, which proposes a model for calculation of loudness in normal-hearing and hearing-impaired subjects. The model is designed for steady state sounds, but an extension of the model allows calculations of loudness of shorter transient-like sounds, too. Reference is made to ISO standard 226 (ISO 1987) concerning equal loudness contours.

EP-B1-1522206 discloses a hearing aid and a method of operating a hearing aid wherein speech intelligibility is improved based on frequency band gain adjustments based on real-time determinations of speech intelligibility and loudness, and which is suitable for implementation in a processor in a hearing aid.

This type of hearing aid and operation method requires the capability of increasing or decreasing the gain as a function of frequency. Additionally, the frequency dependent gain may depend on the current sound situation. For bands with high noise levels, e.g., it may be advantageous to decrease the gain, while an increase of gain can be advantageous in bands with low noise levels, in order to enhance the SII. However, such a simple strategy will not always be an optimal solution, as the SII also takes inter-band interactions, such as mutual masking, into account. A precise calculation of the SII is therefore necessary.

While such a system is generally advantageous it has been found that the amount of gain preferred by an individual hearing aid user may differ from user to user due to the preferences of the individual hearing aid user.

It is not feasible to compute a general relationship between the SII and a given change in amplification gain analytically and therefore some kind of numerical optimization routine is needed to determine this relationship in order to determine the particular amplification gain that gives the largest SII value. However, deriving an optimization routine that provides optimized speech intelligibility in real time using the limited processing resources in a hearing aid is in no way straightforward.

However, in most, if not all, of these gain adjustment methods, the gain levels are modified according to algorithms that have been predefined to reflect requirements for generalized situations, which means that these methods are not specifically optimized neither for the specific user nor for the specific sound environments the specific user is experiencing.

Thus, speech enhancement has been a significant interest to the signal processing community already from the 1960's and earlier, see e.g. Y. Ephraim and D. Malah: "Speech enhancement using a minimum mean-square error short-time spectral amplitude estimator," IEEE Trans. Acoustics, Speech and Signal Processing, vol. ASSP-32, no. 6, pp. 1109-1121, December 1984.

The basic problem concerns the estimation of a clean underlying speech signal from one or more noisy/degraded signals. A more general problem is that of speaker separation, in which one attempts to separate a mixture of (potentially noisy) speech signals into separate clean speech signals.

Hearing impairment limits the ability to cope with background noise. Therefore, a noise reduction (speech enhancement) system is usually seen as an integral part of a hearing aid. When asked about desired improvements of their hearing aids, users often request more effective systems for attenuating (or otherwise managing) background noise.

Traditionally, speech enhancement systems have been based on manually devised statistical models of speech and noise, which in turn lead to signal processing based methods of optimally removing noise from noisy speech. These approaches are limited by the ability to accurately describing speech and noise by statistical models, while keeping these models simple enough to allow closed form derivations of the relevant estimators.

One particularly difficult hearing situation is the so called cocktail party situation where multiple speakers are present at the same time and typically positioned close together.

It has therefore been suggested to provide separation of speakers in order to suppress undesired speakers. Traditionally this has been provided using e.g. various beamforming techniques and more recently speaker separation (which in the following may also be denoted source separation) has been demonstrated based on specifically trained neural networks.

Recently, machine learning (artificial intelligence) has revolutionized speech enhancement (along with many other scientific disciplines). Speech enhancement is essentially a simple regression problem, where a clean signal is estimated from a noisy counterpart. Plentiful training data can easily be obtained by mixing clean speech recordings with separate noise recordings. Proposed methods vary primarily according to their model architecture (how the neural network is configured), the data used for training, and the objective (loss) optimized during training.

However, neither neural network based speech enhancement methods are free from various sound artefacts that results in a less than optimal speech intelligibility and/or perceived sound quality (for the specific user) provided by even the most advanced neural network method.

According to one or more aspects of the disclosure, there is provided a method of assisting a hearing care professional to provide the best possible support for her or his patients with respect to all aspects of a hearing aid user's journey.

### SUMMARY

The following summary is provided to facilitate an understanding of the present disclosure and is not intended to limit the scope of the claims.

In one aspect, the present disclosure relates to a method for generating a summary of a hearing-aid fitting session between a first person and a second person. The method includes generating a transcript of an audio recording of a conversation during the hearing-aid fitting session, recording inputs to hearing-aid fitting software, associating the recorded inputs with corresponding portions of the transcript based on temporal proximity, recognizing words or phrases relating to the recorded inputs, and generating a summary identifying hearing-aid fitting actions and corresponding conversational context. The generated summary may be displayed.

In another aspect, the present disclosure relates to a non-transitory computer-readable medium storing instructions that, when executed by one or more processors, cause a system to perform operations corresponding to the method described above.

Additional features and advantages will become apparent from the detailed description that follows.

### BRIEF DESCRIPTION OF THE DRAWINGS

The accompanying drawings are included to provide a further understanding of the present disclosure and are incorporated in and constitute a part of this specification. The drawings illustrate example embodiments and, together with the description, serve to explain the principles of the disclosure.
FIG. 1 is a flow diagram illustrating an example method for generating a summary of a hearing-aid fitting session.
FIG. 2 is a block diagram illustrating an example non-transitory computer-readable medium storing instructions for generating a summary of a hearing-aid fitting session.
FIG. 3 is a schematic block diagram illustrating an example processing pipeline implemented by the disclosed system for transforming conversational and fitting-software data into structured, verified appointment documentation and configuration-support output.
FIG. 4 is a block diagram illustrating an example computing system for implementing the method for generating a summary of a hearing-aid fitting session.
FIG. 5 is a diagram illustrating an example display of a generated summary of a hearing-aid fitting session.

### DETAILED DESCRIPTION

The following detailed description is provided to assist the reader in gaining a comprehensive understanding of the methods, apparatuses, and systems described herein. However, various changes, modifications, and equivalents of the methods, apparatuses, and systems described herein will be apparent after an understanding of the disclosure of this application. The described embodiments are provided as examples only, and the disclosure is not limited thereto.

Unless otherwise indicated, all numbers expressing quantities, dimensions, conditions, and so forth used in the specification and claims are to be understood as being modified in all instances by the term 'about.'

The terminology used herein is for the purpose of describing particular embodiments only and is not intended to be limiting. As used herein, the singular forms 'a,' 'an,' and 'the' are intended to include the plural forms as well, unless the context clearly indicates otherwise. It will be further understood that the terms 'comprises' and 'comprising,' when used in this specification, specify the presence of stated features, steps, operations, elements, and/or components, but do not preclude the presence or addition of one or more other features, steps, operations, elements, components, and/or groups thereof.

References to 'one embodiment,' 'an embodiment,' 'example embodiment,' 'various embodiments,' and the like indicate that the embodiments so described may include a particular feature, structure, or characteristic, but not every embodiment necessarily includes the particular feature, structure, or characteristic. Further, repeated use of the phrase 'in one embodiment' does not necessarily refer to the same embodiment, although it may.

As used herein, the terms 'module,' 'unit,' 'component,' 'engine,' and 'system' refer to, but are not limited to, a hardware circuit, such as a processor, an application-specific integrated circuit (ASIC), a field-programmable gate array (FPGA), or a digital signal processor (DSP); a software component executing on a hardware processor; a firmware component; or any combination thereof. A module, unit, component, engine, or system may be implemented entirely in hardware, entirely in software executing on one or more processors, or as any combination of hardware and software. For example, the speech-to-text engine, the trained machine-learning model, and the summary generation operations described herein may each be implemented as software modules executing on one or more general-purpose or special-purpose processors, as dedicated hardware accelerators, or as a combination thereof. When implemented in software, the modules, units, components, engines, and systems may be stored as computer-executable instructions on one or more non-transitory computer-readable storage media and executed by one or more processors.

The block diagrams and flow diagrams in the accompanying drawings illustrate the architecture, functionality, and operation of possible implementations of systems, methods, and computer-readable media according to various embodiments of the present disclosure. In this regard, each block in the block diagrams or flow diagrams may represent a module, segment, or portion of instructions, which comprises one or more executable instructions for implementing the specified logical function(s). In some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved.

It is noted that in the following the terms "appointments" and "hearing aid fitting sessions" may be used interchangeably.

It is also noted that in the present context the term "case data" refers to the structured, organized information surrounding e.g. a specific customer issue, service reques, inquiry or sales opportunity. Unlike a simple one-time transaction record, a "case" represents a dynamic, often multi-step process that need to be tracked from initial intake to final resolution.

In an aspect of the present disclosure, a hearing-aid fitting session includes an interaction in which a hearing care professional (HCP) and a patient are jointly engaged in configuring, adjusting, verifying, or evaluating operational parameters of one or more hearing aids using a hearing-aid fitting software. The fitting session may be conducted in a clinical environment, remotely, or in a hybrid setting, and may include conversational dialogue, configuration actions performed in hearing aid fitting software, and resulting patient feedback. The fitting session is distinct from a general meeting in that it involves the application of configuration actions directly affecting a hearing aid worn by the patient.

However, the terminology "hearing aid fitting software" is not to be interpreted narrow such as representing only software that sets the gain parameters of a hearing aid or hearing aid system. Instead "hearing aid fitting software" shall be interpreted to also be configured to support hearing aid fitting before, during and after programming activities. Therefore in the following "hearing aid fitting software" includes the capability to at least one of:
- store hearing aid user identity and case data (wherein case data comprises at least one of structured, organized information surrounding a specific hearing aid user issue, service request, inquiry, or sales opportunity). Unlike a simple, one-time transaction record, a "case" represents a dynamic, often multi-step process that needs to be tracked from initial intake to final resolution);
- store issues, complaints, observations, and notes;
- associate such data with a specific user and hearing aids;
- optionally use such data automatically in subsequent fittings;
- carry out parameter tuning and/or programming of a hearing aid;

Therefore "Hearing aid fitting software" as used herein also refers to a computer-implemented system configured to at least one of:
(i) create, store, and maintain a hearing aid user record,
(ii) associate the user record with one or more hearing aids,
(iii) store fitting-related data including audiological data, user feedback, usage observations, and professional notes, and
(iv) support hearing aid fitting, follow-up, and aftercare processes, irrespective of whether acoustic parameters are actively modified during a given interaction.

Consequently "hearing-aid fitting session" as used herein also includes meetings that does not necessarily involve changing a hearing aid setting (such as carry out a parameter tuning, such as the gain or a noise reduction parameter) using the hearing aid fitting software.

According to one embodiment, a non-transitory computer-readable medium storing computer-executable instructions that, when executed by one or more processors, causes a method, to record a sequence of inputs to a hearing-aid fitting software during the hearing-aid fitting session. Such inputs includes discrete fitting actions including, but not limited to, parameter adjustments, configuration selections, confirmation actions, application of fitting rationales, activation or deactivation of hearing-aid programs, adjustments of frequency-dependent gain, noise-reduction settings, or feedback-management parameters. Each fitting-software input constitutes an explicit control action applied to the hearing aid and is stored as a fitting-software event.

In an embodiment, each fitting-software event is associated with one or more portions of the transcript based on temporal proximity between a timestamp of the fitting-software event and timestamps of spoken utterances in the conversation. A fitting-software event may be associated with utterances occurring before, during, or after the event within a predefined temporal window, thereby establishing a contextual link between conversational content and the applied fitting action.

In an embodiment the system is configured to automatically recognize, within transcript portions associated with fitting-software events, words or phrases spoken by the patient or the hearing care professional that relate to, explain, motivate, react to, or confirm the fitting-software inputs. Such recognized words or phrases may include expressions of perceived sound quality, comfort, loudness, intelligibility, satisfaction, dissatisfaction, or agreement with the performed fitting action.

According to one embodiment, summary generation includes applying one or more machine-learning models to a combined input that includes both (i) transcript portions associated with fitting-software events and (ii) the recorded fitting-software inputs themselves. The machine-learning model is instructed to identify hearing-aid fitting actions performed during the session and to generate a summary that links each identified fitting action to its corresponding conversational context.

In an embodiment, the generated summary explicitly identifies one or more hearing-aid fitting actions and presents each fitting action together with conversational context describing the rationale for the action and the patient's response. The summary may interleave conversational information and fitting-software events or present them in a structured manner, such that the summary represents a traceable record of fitting decisions made during the hearing-aid fitting session.

In an embodiment the generated summary is displayed to the hearing care professional on a workstation or mobile device and may include visual indications of the fitting-software inputs associated with recognized conversational content. This enables review, validation, and subsequent documentation of fitting actions performed during the hearing-aid fitting session.

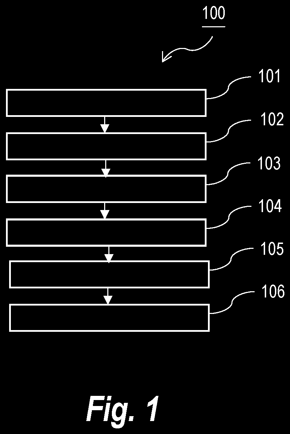

### Figure 1: Method of generating a summary of a hearing aid fitting

Reference in now given to Figure 1 illustrating an exemplary method 100 for generating a summary of a hearing-aid fitting session between a first person and a second person. The method 100 may be performed by one or more computing devices, such as a workstation executing hearing-aid fitting software in communication with one or more local or remote processing resources. The steps of the method may be performed in the order shown, in a different order, or in parallel, unless expressly stated otherwise.

### Audio Capture and Speech-to-Text Transcription

At step 101, an audio recording of a conversation between the first person and the second person during the hearing-aid fitting session is processed using a speech-to-text engine executing on one or more computing devices. The speech-to-text engine generates a transcript representing spoken utterances occurring during the session. The transcript may include time stamps corresponding to the temporal positions of the utterances in the audio recording.

### Recording Fitting-Software Inputs

At step 102, a sequence of inputs to hearing-aid fitting software is recorded during the hearing-aid fitting session. The recorded inputs may include, without limitation, one or more of:
identification of a hearing-aid user; case or session data; reported issues or complaints;
observations or clinical notes; hearing-aid parameter adjustments; configuration selections; and
confirmation actions applied to one or more hearing aids.

Each recorded input may include a time stamp or other temporal indicator corresponding to when the input was applied via the fitting software. For example, a time-stamped input may record that a gain adjustment of +3 dB at 2 kHz was applied at time 00: 12:34 during the fitting session, enabling the system to correlate this fitting action with conversational content occurring at or near that time.

### Temporal Association of Inputs and Transcript Portions

At step 103, the recorded inputs to the hearing-aid fitting software are associated with corresponding portions of the transcript. The association is performed based at least in part on temporal proximity between the time stamps of the recorded inputs and the time stamps of spoken utterances in the transcript. In this manner, fitting-software inputs can be linked to conversational context occurring at or near the time the inputs were made.

### Recognition of Relevant Words or Phrases

At step 104, words or phrases within the associated portions of the transcript are automatically recognized as relating to the recorded inputs to the hearing-aid fitting software. The recognized words or phrases may be spoken by the first person, the second person, or both, and may include references to perceived sound quality, comfort, performance issues, hearing aid handling issues, complaints, issues with wirelessly connecting a hearing aid to e.g. a smart phone, a TV Streamer or an AURACAST streamer, adjustment requests, or confirmations related to applied fitting actions.

### Summary Generation Using a Machine-Learning Model

At step 105, a summary of the hearing-aid fitting session is generated by applying a machine-learning model to at least the associated portions of the transcript and the recorded inputs to the hearing-aid fitting software. For example, the machine learning model may be a trained machine learning model. The machine-learning model may be trained to identify hearing-aid fitting actions and to extract corresponding conversational context explaining the purpose, motivation, or outcome of those actions. The resulting summary may include structured or unstructured text describing the fitting session in a clinically meaningful manner. For example, the trained machine-learning model may be a large language model (LLM) that has been provided context about the audiological domain, professional and brand terminology, and fitting-software action interpretations.

### Display of the Generated Summary

At step 106, the generated summary is displayed to a user (such as a hearing care professional) or to several persons (such as a hearing care professional and a patient) via at least one graphical user interface. The displayed summary includes an indication of the recorded fitting-software inputs associated with the recognized words or phrases from the transcript, thereby providing traceability between conversational statements and specific hearing-aid fitting actions performed during the session. For example, the visual indications may include color-coded highlights, hyperlinks, side-by-side presentation of fitting actions and transcript excerpts, or expandable sections that reveal the underlying conversational context when selected by the user. In an embodiment, the displayed summary provides a traceable record of fitting decisions made during the hearing-aid fitting session, enabling the hearing care professional to verify that each fitting action is supported by corresponding patient feedback or clinical rationale.

In an embodiment, interaction data derived from the generated summary is stored by the one or more processors for availability during a subsequent hearing-aid fitting session. The stored interaction data may include, but is not limited to, at least one of: reported issues, hearing aid user observations, hearing care professional observations, counseling notes, and maintenance actions. For example, the hearing-aid fitting software may be configured to automatically retrieve the stored interaction data and apply the stored interaction data when determining one or more fitting recommendations during the subsequent hearing-aid fitting session, thereby creating a continuous improvement loop across multiple fitting sessions.

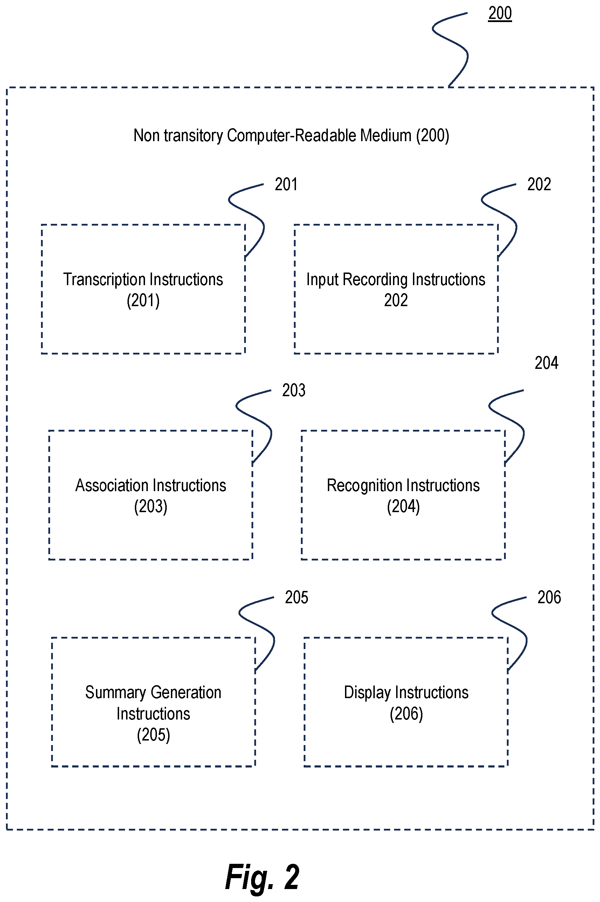

### Figure 2: Non-Transitory Computer-Readable Medium

Reference in now given to Figure 2 illustrating an exemplary non-transitory computer-readable medium 200 storing computer-executable instructions which, when executed by one or more processors, cause a system to perform operations for generating a summary of a hearing-aid fitting session between a first person and a second person.

The non-transitory computer-readable medium 200 may include any suitable tangible storage medium, including but not limited to semiconductor memory, magnetic storage, or optical storage, and stores a plurality of instruction elements described below.

The instruction elements shown in FIG. 2 are illustrated as separate elements for clarity; however, the instructions may be combined, subdivided, or reordered without departing from the scope of the claims.

### Speech-to-Text Transcription Instructions

The computer-readable medium 200 stores transcription instructions 210 which, when executed, cause the system to generate, using a speech-to-text engine, a transcript of an audio recording of a conversation between the first person and the second person during the hearing-aid fitting session. The transcript may include time-aligned representations of spoken utterances.

### Fitting-Software Input Recording Instructions

The computer-readable medium 200 further stores input-recording instructions 220 which, when executed, cause the system to record a sequence of inputs to hearing-aid fitting software during the hearing-aid fitting session. The recorded inputs may include at least one of identification of a hearing-aid user; case or session data; reported issues or complaints; observations or clinical notes; hearing-aid parameter adjustments; configuration selections; and confirmation actions applied to one or more hearing aids, and may be associated with corresponding time information.

### Association Instructions

The computer-readable medium 200 further stores association instructions 230 which, when executed, cause the system to associate recorded inputs to the hearing-aid fitting software with corresponding portions of the transcript. The association may be based at least in part on temporal proximity between recorded inputs and spoken utterances in the conversation.

### Recognition Instructions

The computer-readable medium 200 further stores recognition instructions 240 which, when executed, cause the system to automatically recognize, within the associated portions of the transcript, words or phrases spoken by at least one of the first person or the second person that relate to the recorded inputs to the hearing-aid fitting software.

### Summary Generation Instructions

The computer-readable medium 200 further stores summary-generation instructions 250 which, when executed, cause the system to generate a summary of the hearing-aid fitting session by applying a machine-learning model to at least the associated portions of the transcript and the recorded inputs to the hearing-aid fitting software. The generated summary identifies one or more hearing-aid fitting actions and corresponding conversational context.

### Display Instructions

The computer-readable medium 200 further stores display instructions 260 which, when executed, cause the system to cause the generated summary to be displayed, for example via a graphical user interface associated with the hearing-aid fitting software or via more than one graphical user interface to several persons (such as a hearing care professional and a patient).

### Configuration-State Classification and Consistency Determination

In one embodiment, the system is configured to determine whether fitting-software interaction events recorded during a hearing-aid fitting session are consistent with one or more hearing-aid configuration states. A configuration state represents a defined operational state of the hearing aid with respect to one or more signal-processing parameters, including but not limited to gain settings, noise-reduction behavior, directionality, frequency-band configuration, feedback management, or speech enhancement processing.

According to this embodiment, a processing subsystem executes a trained machine-learning model that receives, as input, (i) a time-ordered sequence of fitting-software interaction events and (ii) transcript portions temporally associated with those interaction events. The trained machine-learning model is configured to classify each interaction event with respect to one or more inferred configuration states and to determine whether the interaction event is consistent, inconsistent, or conditionally permissible relative to the associated conversational context.

The classification may be based on detected co-occurrence patterns between spoken utterances and fitting-software actions, semantic interpretation of transcript content, prior stored fitting-state data, or combinations thereof. In this manner, the system produces a technically meaningful determination of configuration-state consistency rather than merely generating a descriptive summary.

### Structured Fitting-State Data and Permissible Signal-Processing States

The system is further configured to generate structured fitting-state data representing applied and permissible configuration states of the hearing aid during the fitting session. The structured fitting-state data may include a formal representation of allowable signal-processing states derived from classified fitting-software interaction events, applicable audiological constraints, and recognized conversational confirmations or limitations.

In one embodiment, permissible signal-processing states comprise defined parameter ranges, enabled or disabled processing features, dependencies between multiple processing parameters, or combinations thereof. For example, a permissible signal-processing state may define allowable ranges for frequency-band gain adjustments, noise-reduction aggressiveness, directional microphone settings, or speech enhancement parameters based on previously applied fitting actions and patient feedback.

The structured fitting-state data may be stored as machine-readable metadata accessible to the fitting software and may be updated dynamically as additional fitting-software interaction events are classified during the fitting session.

### Fitting Control Interface and Pre-Execution Constraint of Fitting Operations

In an embodiment, the system includes a fitting control interface operatively coupled to the hearing-aid fitting software. The fitting control interface is configured to provide the structured fitting-state data to the fitting software prior to execution of subsequently requested fitting operations.

The fitting control interface may control operation of the fitting software by performing one or more technical actions selected from:
validating a subsequently requested fitting operation against the permissible signal-processing states;
- preventing execution of a fitting operation that is determined to be incompatible with the structured fitting-state data; and
- modifying requested fitting operations by constraining parameter values or selectable options to remain within permissible configuration states.

In this manner, the hearing-aid fitting software is not merely informed of prior fitting actions but is technically constrained in its operation based on machine-classified determinations derived from both fitting-software interaction events and conversational context.

### Temporal Association and Machine-Learning-Based Classification

In one embodiment, the association between fitting-software interaction events and transcript portions is performed using timestamp synchronization derived from a fitting-session clock. The trained machine-learning model is configured to evaluate temporal proximity, semantic alignment, and sequence patterns when classifying configuration-state consistency.

The trained machine-learning model may be implemented as a neural network, transformer-based language model, or other supervised or semi-supervised machine-learning architecture trained on historical fitting sessions annotated with configuration outcomes and conversational confirmations. Classification output generated by the model is used directly in generating the structured fitting-state data.

### Cross-Session Reuse and Consistency Checking

In an embodiment, the structured fitting-state data generated during a hearing-aid fitting session is stored for reuse in a subsequent fitting session for the same hearing-aid user. Upon initiation of a subsequent fitting session, the fitting control interface may retrieve previously stored structured fitting-state data and apply it to constrain, validate, or modify requested fitting operations prior to execution by the fitting software.

The system may further be configured to detect inconsistencies between stored fitting-state data and newly requested fitting operations and to generate a technical alert to the fitting software or user interface. Such alerts may be generated automatically upon detection of an incompatibility between permissible signal-processing states and a requested configuration action.

### Visual Representation

In an embodiment, the fitting control interface additionally causes display of a visual representation of the structured fitting-state data, including permissible configuration states, applied constraints, and detected inconsistencies. The visual representation may be provided for informational review by a hearing care professional without affecting the technical control functions described above.

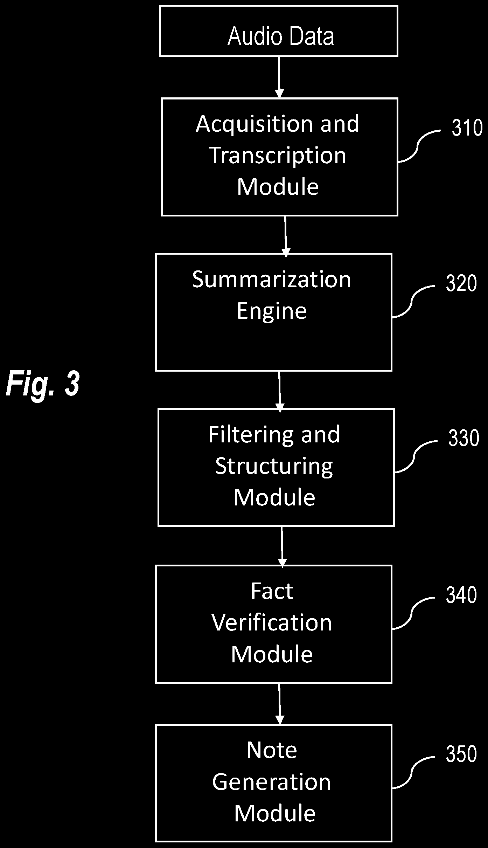

### Figure 3: Example processing pipeline

Reference is now given to FIG. 3 that illustrates an example processing pipeline implemented by the disclosed system for transforming conversational and fitting-software data into structured, verified appointment documentation and configuration-support output.

As shown in FIG. 3, an audio acquisition and transcription module (310) receives audio data representing a conversation between a patient and a hearing care professional and generates transcript data using a speech-to-text process. The transcript data is supplied to a language-based summarization engine (320) configured to generate an initial machine-generated summary representing the substantive content of the conversation.

The initial summary is provided to a content filtering and structuring module (330), which applies domain-specific constraints to selectively retain information that is audiologically relevant or relevant to the hearing care professional, and to organize the retained information into a structured intermediate representation.

The structured intermediate representation is further processed by a fact verification module (340) configured to decompose the structured content into a plurality of atomic facts and to evaluate each atomic fact against the transcript data to determine whether the atomic fact is supported, uncertain, or unsupported. Based on the verification results, a verified summary representation is produced.

The verified summary representation is provided to a note-generation module (350), which generates a finalized appointment note in a natural-language format suitable for presentation to the hearing care professional or storage in a clinical record system. In some embodiments, the note-generation module (350) additionally generates alternative versions of the appointment note customized for different recipients.

One or more of the modules illustrated in FIG. 3 may be implemented using trained machine-learning models, including large language models, and may be executed sequentially, iteratively, or in parallel. Although shown as distinct functional blocks, the modules may be integrated, subdivided, or combined in alternative implementations without departing from the scope of the disclosure.

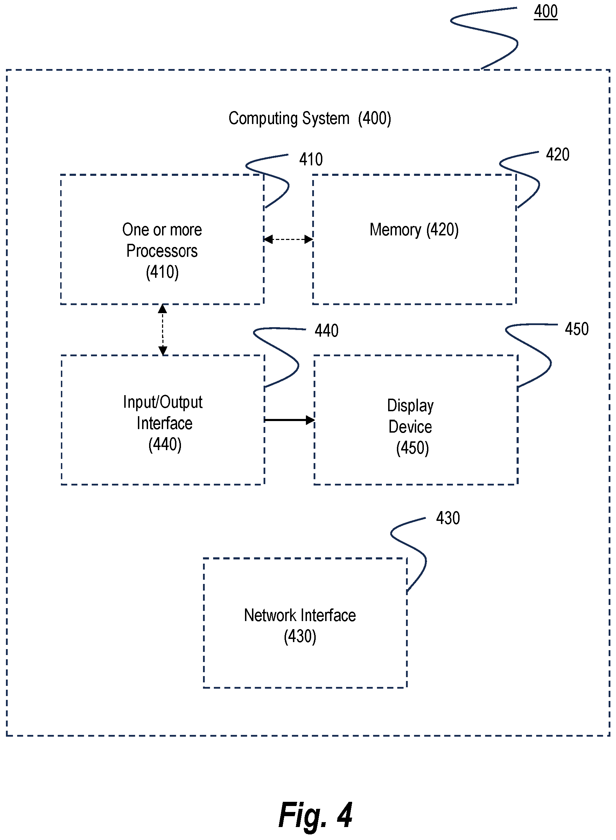

### Figure 4: example computing system

Reference is now given to FIG. 4 that illustrates an example computing system 400 suitable for implementing the methods and operations described herein.

The computing system 400 includes one or more processors 410 and a memory 420 coupled to the one or more processors 410. The memory 420 stores computer-executable instructions that, when executed by the one or more processors 410, cause the computing system 400 to perform the operations described with reference to FIGS. 1 and 2.

The one or more processors 410 may include one or more central processing units (CPUs), graphics processing units (GPUs), application-specific integrated circuits (ASICs), field-programmable gate arrays (FPGAs), digital signal processors (DSPs), or any combination thereof. For example, the one or more processors 410 may be processors of a clinic workstation running the hearing-aid fitting software, processors of a cloud-based server that performs the speech-to-text transcription and summary generation, or processors of a mobile device such as a smartphone or tablet used by the hearing care professional. The one or more processors 410 are configured to execute the speech-to-text engine, the trained machine-learning model, and the temporal association, recognition, and summary generation operations described herein.

The memory 420 may include one or more of random-access memory (RAM), read-only memory (ROM), flash memory, solid-state storage, magnetic storage, optical storage, or any other non-transitory computer-readable storage medium. For example, the memory 420 may store a database of prior fitting session summaries, patient audiograms, hearing-aid configuration profiles, and trained machine-learning model parameters used for summary generation. The memory 420 stores the computer-executable instructions as well as data including audio recordings, transcripts, time-stamped fitting-software inputs, and generated summaries.

The computing system 400 further includes a network interface 430 configured to communicate with one or more external devices over a network. For example, the network interface 430 may communicate over a local area network within a clinic, over the internet to a cloud-based speech-to-text service, or via a wireless connection such as Bluetooth or Wi-Fi to a smartphone running the Aura Transcribe app. For example, the network interface 430 may be used to receive audio recordings from a recording device such as a smartphone, to communicate with a hearing-aid fitting software application executing on a workstation, and to transmit generated summaries to one or more display devices.

The computing system 400 further includes an input/output interface 440 coupled to the one or more processors 410. The input/output interface 440 is configured to receive input from one or more input devices, such as a keyboard, mouse, touchscreen, or microphone, and to provide output to one or more output devices, such as a display device 450. For example, the input/output interface 440 may receive audio input from a microphone array positioned in a fitting room, receive fitting-software commands from a keyboard or mouse, or provide output to a monitor displaying the Aura Notes web application. The display device 450 is configured to display the generated summary, including visual indications linking the identified hearing-aid fitting actions to the corresponding conversational context, thereby providing a traceable record of fitting decisions made during the hearing-aid fitting session. For example, the display device 450 may be a desktop monitor at a fitting station, a tablet held by the hearing care professional, or a screen shared between the hearing care professional and the patient during a review of the generated summary.

The computing system 400 may be implemented as a single device, such as a workstation or server, or as a distributed system comprising multiple interconnected devices, such as a cloud-based computing platform. In a distributed implementation, the one or more processors 410 and the memory 420 may be distributed across multiple physical or virtual machines, and the operations described herein may be performed by different processors at different locations. For example, in a distributed implementation, the smartphone running the Aura Transcribe app may capture and transmit the audio recording to a cloud server, the cloud server may perform the speech-to-text transcription and summary generation using the trained machine-learning model, and the generated summary may be transmitted to the clinic workstation running the Aura Notes web application for display to the hearing care professional.

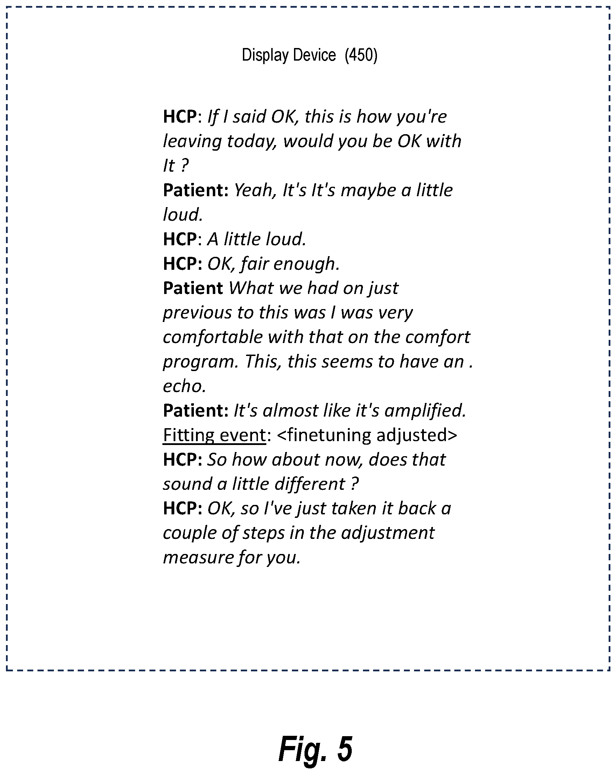

### Figure 5: Example display of a generated summary

Reference is now given to FIG. 5 that illustrates an example display of a generated summary of a hearing-aid fitting session as displayed on a display device, such as the display device 450 described with reference to FIG. 4. The display may include visual indications linking hearing-aid fitting actions to corresponding conversational context, thereby providing a traceable record of fitting decisions made during the hearing-aid fitting session.

While the present disclosure has been described with reference to specific embodiments, it will be understood by those skilled in the art that various changes may be made and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiments disclosed, but that the present disclosure will include all embodiments falling within the scope of the appended claims.

### Additional, Non-Limiting Applications of Conversational Data Processing

The following is independent of the hearing-aid configuration parameter constraint mechanisms described above and is presented as a separate, optional application of conversational data processing.

In the following is described a method for generating a summary of a meeting between a patient and a hearing care professional in prose.

This method is carried out by a system that in the following is denoted Aura. The name AURA is used herein solely as a convenient identifier for the embodiments described below and does not limit the scope of the claims. Thus all the features and embodiments described below can be freely combined with the embodiments described above such as those disclosed in connections with the Figures 1 and 2.

Aura is a notetaking assistant designed to ease the documentation burden for Hearing Care Professionals (HCPs) and allowing them to focus their efforts on patient care.

Aura includes three separate components, which works together to generate a complete and accurate medical note documenting an audiological appointment between a HCP and a patient:

### Aura Transcribe

Aura Transcribe is a smartphone app, which uses the smartphone as a recording device. The app allows the HCP to record appointments and send the recordings to the cloud for transcription.

### Aura Helper

Aura Helper is a small app that is installed on the HCP's computer which collects actions taken in the fitting software (FSW)

### Aura Notes

Aura Notes is a web app and the main component of the Aura system. Aura Notes works as a staging area, where the generated notes are presented to the HCP for final refinements. Aura Notes allows HCPs to define their preference for note taking style by presenting a list of presets for note structure and detail levels, and further it allows HCPs to upload a writing sample from which a "writing style" is extracted and imposed on future generated notes.

### How It Works

When recordings from an appointment is sent to the cloud, the recordings are processed by a Speech-to-Text (STT) model, which has been presented with common audiological terms and specific brand vocabulary for improved accuracy on this domain. The recordings are processed as a collection of timestamped utterances, such that a full appointment transcript includes a list of what was said and when.

(A subset of) FSW actions are processed by the Aura Helper app and are timestamped, such that they can be presented in chronological order along with the transcribed utterances.

### Core Summary

The combined list of utterances and FSW actions are presented to a Large Language Model (LLM), which is instructed to provide a summary of the appointment. The LLM has been provided some context about the audiological domain, professional and brand terminology and FSW action interpretations. It has further been instructed in attempting to correct any transcription errors that might occur in the automatic STT model.

The first summary is further refined (filtered) by an LLM which is instructed to only preserve information that is
1. Audiologically relevant
2. Relevant to the HCP

Furthermore, it is tasked with structuring information and making sure that information is only presented once.

As a last step in the summary generation process, the summary is broken down into *atomic facts* by an LLM. An atomic fact is a short, stand-alone fact extracted from the summary. Each fact is reviewed against the transcript by an LLM, which provides a rating of "Yes," "Uncertain" or "No," depending on whether the fact can be verified.

The final verified summary is called "Core summary". The Core Summary is the internal representation - or understanding - of what has happened at an appointment, and it is the basis on which appointment notes will be generated.

The Core Summary includes a list of summaries for different topics of the appointment along with a list of relevant quotes (determined by the LLM) from the transcript for each topic. This allows the note generation process to determine exactly how a patient's issue was described or quotes complaints verbatim in the final note.

### Note Generation

The Core Summary is parsed by an LLM which presents the information as an appointment note according to the customization settings for structure and detail.

This note is further refined by an LLM which makes sure that the generated note is concise and to the point, refines on structure and detail levels and - if provided - imposes the HCPs personalized writing style on the note.

In the present context "parsing by a Large Language Model (LLLM)" refers to tokenizing text and transforming it into a contextualized numerical representation through learned attention mechanisms, enabling probabilistic interpretation and generation without explicit grammatical rules.

### Staging

The proposed note is displayed in the Aura Notes web app, where the HCP can change between the different levels of structure and detail, toggle custom style on and off and finally review and edit the note to their satisfaction. The finalized note can then be copied into their respective office management system.

### Fitting software notes enrichment

It is noted that this method and the associated system are especially advantageous compared to known methods and systems due to:
Using timestamping from fitting events (and fitting metadata; hearing aid model selection, acoustical coupling, etc.) to enrich the content of an appointment note such as a summary of a meeting between a patient and a hearing care professional.

In some embodiments the timestamping is implemented as:
a. a separate section in the note / summary disentangled from the remaining content, such as "Fitting information: Did A, B, and C.",
   or
b. interleaved with the remaining note /summary in a fluid manner, such as "Patient complained about A. Did B and C in fitting software, to which patient reported satisfaction."

### Recommendations in FSW

When opening fitting software during an appointment, Aura can recommend certain actions in the fitting software, for increased efficiency and ease of use. These actions can be
a. actions that have previously been promised/verbalized by the HCP to be performed (e.g. "we can set up a music program for you")
b. actions that are derived by Aura through an internal recommender system
   - This can be based on latent processing of the previous conversational content (e.g. patient has a specific complaint in natural language, Aura can then identify possible solutions to said complaint, e.g. through LLM prompting against a solution database, or any more advanced data-informed predictive ML recommender systems)

"Previously" can denote at any previous time during the current appointment, or at any previous time during a prior appointment by the same patient.

Moreover, an implementation can be either one-off or real-time:
- In a one-off implementation (simplest), when opened, the fitting software would request recommendations from Aura based on the conversational content until that point-in-time
- In a real time implementation, Aura needs to continuously classify/observe for whether incoming utterances are actionable (which poses implementation difficulty to do in a scalable and cost-efficient manner, with a sufficiently low latency)

### End-to-end AI Fitting

Aura could be enhanced with
a. instructions in following a certain workflow or fitting policy, and
b. obtain a voice-to-voice conversational interface directly with the patient.

The workflow/fitting policy could include instructions such as "always perform a first fit, followed by in-situ measurements, a feedback test, and then react to feedback from the patient for further tuning".

In that situation, it would be able to conduct a fitting session without involvement from the HCP.

The patient could engage in a natural-language conversation with an Aura AI that performs a fitting session with the same capabilities through the fitting software as a traditional HCP would have.

This could either be conducted in the clinic (optionally in a separate room) allowing the HCP to focus on other tasks while Aura is "self-fitting" the hearing aids together with the patient, or it could be enabled for the patient directly through a smart-phone app.

### Sales Recommendations

Selling hearing aids can be an awkward task for many HCPs, and it can be difficult to translate from patient-expressed needs, in their own language, to matching this with newest technology available on the market from manufacturers.

Aura could be used to bridge this gap. Prior, during or after an HAE (hearing aid evaluation) appointment, Aura could
1. retrieve the most recent hearing aid technology and accessories available in a database
   a. (optionally) cross-reference with insurance policy/coverage to filter on available models and/or out-of-pocket price
   b. (optionally) cross-reference with clinic stock database to filter on models available for same-day fitting
2. Process previous patient expressions against list of available models and accessories and derive which matches best.

The results could be presented in a way that the HCP can co-present to the patient, gaining some credibility/backing in a sales situation, offering a way for them to distance themselves from the recommendation. Furthermore, this could apply to different price points of the models.

This system could be extended with a real-time component listening in for patient questions regarding details on the specific models, and Aura providing answers back, either to the HCP directly or to HCP and patient together.

### HCP Training

Aura could be used as a training tool, allowing HCPs to train on certain aspects of their care.

This could be *pro-active,* where Aura is instructed to observing for specific behavior/patterns that the HCP wants to improve in, examples could be e.g.
- "Help me show more empathy towards the patients"

It could also be *reactive,* where Aura is used as a buddy after one or more appointments, where the HCP could ask questions such as
- "What could I have said differently to de-escalate the situation?"
- "How could I cut 10 minutes off my fitting sessions?"

Aura can then go through transcripts and give provocations or recommendations.

### Clinic Insights

Any of the HCP Training insights could be provided for business owners or clinic chains to allow for advanced analytics/insights, potentially unlocking answers to questions such as why one provider is converting much better than another, etc.

### Shop & OMS Integration

Agreements made during an appointment could be integrated with a shop or order management system (OMS), allowing for seamless integration. Examples could be:
"Let's book a follow-up appointment for Monday 25^{th} at 9AM" could automatically draft an appointment booking for said patient at said time, only requiring the HCP to approve.

"I'll order a pair of the hearing aids in the color we agreed" could automatically draft a purchase order draft pending confirmation from HCP.

## Claims

1. A computer-implemented system for supporting technical operation of hearing-aid fitting software during or after a hearing-aid fitting session, the system comprising:
- a data acquisition subsystem configured to receive audio data representing a conversation occurring during a hearing-aid fitting session;
- a transcription subsystem configured to generate transcript data from the audio data;
- an event acquisition subsystem configured to obtain a time-ordered sequence of fitting-software interaction events recorded by hearing-aid fitting software during the fitting session, the interaction events comprising at least parameter adjustments, configuration selections, or confirmation actions applied to a hearing aid;
- an association subsystem configured to temporally associate the fitting-software interaction events with corresponding portions of the transcript data;
- a processing subsystem comprising one or more processors executing a trained machine-learning model, the processing subsystem being configured to classify the fitting-software interaction events with respect to hearing-aid configuration states to determine configuration-state consistency between the fitting-software interaction events and the temporally associated transcript data;
- a fitting-state generation subsystem configured to generate structured fitting-state data identifying applied configuration states and permissible signal-processing states of the hearing aid during the fitting session; and
- a fitting control interface operatively coupled to the hearing-aid fitting software and configured to provide the structured fitting-state data to the hearing-aid fitting software to control at least one of validation, modification, or constraint, prior to execution by the fitting software, of subsequent fitting operations,
whereby operation of the hearing-aid fitting software is technically constrained based on machine-classified determinations of configuration-state consistency and permissible signal-processing states.

2. The system of claim 1, wherein the classified configuration states represent permissible signal-processing states corresponding to signal-processing parameters comprising at least one of noise reduction parameters, directional microphone parameters, frequency-band gain parameters, or speech enhancement parameters.

3. The system of claim 1 or 2, wherein the fitting control interface prevents execution, prior to execution by the fitting software, of subsequently requested fitting operations that are incompatible with the permissible configuration states identified in the structured fitting-state data.

4. The system of any of claims 1-3, wherein the fitting control interface validates subsequently requested fitting operations prior to execution by the fitting software against the structured fitting-state data.

5. The system of any of claims 1-4, wherein the fitting control interface modifies subsequently requested fitting operations prior to execution by the fitting software by restricting parameter ranges to remain within the permissible configuration states.

6. The system of any of claims 1-5, wherein the association subsystem temporally associates fitting-software interaction events and transcript data using timestamp synchronization derived from a fitting-session clock.

7. The system of any of claims 1-6, wherein the trained machine-learning model classifies fitting-software interaction events based on co-occurrence patterns between interaction events and associated spoken utterances for determining configuration-state consistency..

8. The system of any of claims 1-7, wherein the transcription subsystem executes a speech-to-text engine operating on audio data captured by a microphone associated with a fitting workstation.

9. The system of any of claims 1-8, wherein the processing subsystem is implemented on a remote computing system communicatively coupled to the fitting software via a network connection.

10. The system of any of claims 1-9, wherein the structured fitting-state data is stored for reuse to constrain fitting operations prior to execution by the fitting software in a subsequent fitting session for the same hearing-aid user.

11. The system of any of claims 1-10, wherein the system is configured to detect inconsistencies between stored fitting-state data and subsequently requested fitting operations and to generate a technical alert to the fitting software.

12. The system of any of claims 1-11, wherein the fitting control interface further causes display of a visual representation of the structured fitting-state data for informational review.

13. A computer-implemented method for supporting technical operation of hearing-aid fitting software during or after a hearing-aid fitting session, comprising:
- receiving audio data representing a conversation occurring during the fitting session;
- generating transcript data from the audio data;
- obtaining a time-ordered sequence of fitting-software interaction events recorded during the fitting session;
- temporally associating the interaction events with portions of the transcript data;
- classifying the interaction events with respect to hearing-aid configuration states to determine configuration-state consistency using a trained machine-learning model;
- generating structured fitting-state data identifying applied configuration states and permissible signal-processing states; and
- providing the structured fitting-state data to the fitting software to control validation or constraint prior to execution by the fitting software of subsequent fitting operations.

14. The method of claim 13, wherein controlling subsequent fitting operations comprises preventing execution , prior to execution by the fitting software, of configuration actions that conflict with the permissible configuration states.

15. The method of claim 13 or 14, further comprising storing the structured fitting-state data for application in a subsequent fitting session.
